# FASCICULE DE BREVET EUROPEEN

(11) **EP 3 803 328 B1**
(45) Date de publication et mention de la délivrance du brevet: **15.03.2023**
(21) Numéro de dépôt: 19737172.7
(22) Date de dépôt: 29.05.2019
(51) Int. Cl.: G01N 3/08, G01N 3/14

(54) **MACHINE DE TEST EN TRACTION**
TRAKTIONSPRÜFMASCHINE
TRACTION TEST MACHINE

(30) Priorité: 30.05.2018 FR 1854612
(43) Date de publication de la demande: 14.04.2021
(73) Titulaire: Safran Helicopter Engines, 64510 Bordes (FR)
(72) Inventeur: ADER, Gilles, 77550 MOISSY-CRAMAYEL (FR); SIRET, Christophe, 77550 MOISSY-CRAMAYEL (FR); LAMARQUE, Pierre, 77550 MOISSY-CRAMAYEL (FR)
(74) Mandataire: Ernest Gutmann - Yves Plasseraud S.A.S.
(86) Numéro de dépôt international: PCT/FR2019/051271
(87) Numéro de publication internationale: WO 2019/229386

(56) Documents cités:
- FR-A1- 2 577 674
- FR-A1- 2 918 174

## Description

### CONTEXTE / RESUME DE L'INVENTION

La présente invention concerne une machine de test en traction, et plus particulièrement les moyens permettant, structurellement, de sécuriser l'obtention d'un niveau de précision élevé sur les courbes de déformation exploitables issues des tests sur éprouvettes menés sur cette machine.

Il existe déjà de telles machines comprenant :
- un bâti pourvu d'un premier élément de fixation à une première extrémité d'une éprouvette d'essai dont un allongement est à mesurer, suivant un axe (X1) de traction, et
- des moyens de traction adaptés à exercer une traction suivant l'axe (X1) de traction et pourvu d'un second élément (de fixation) formant une tige axiale de fixation à une seconde extrémité de l'éprouvette, coaxialement à l'axe (X1) de traction.

Le document FR2918173 en divulgue un exemple, à savoir une machine d'essais de fluage ou de fatigue en traction où une éprouvette d'essai est soumise à un unique cycle (ou un nombre réduit de cycles) pour tester l'endurance d'un matériau soumis à des efforts variables. La machine, de conception relativement simple et économique, comprend :
- un bâti pourvu d'un élément supérieur de fixation à ladite première extrémité (ici supérieure) de l'éprouvette d'essai, suivant l'axe (X1) de traction, et
- un levier monté pivotant sur le bâti autour d'un axe transversal audit axe (X1) de traction et pourvu de moyens de liaison avec l'éprouvette, comprenant ledit second élément (ici inférieur) de fixation à la seconde extrémité (ici également inférieure) de l'éprouvette, coaxialement à l'axe (X1) de traction. Les publications FR2577674 et FR2918174 aussi divulguent les machines de test en traction.

Une extrémité du levier porte une masse pour appliquer un effort axial de traction à l'extrémité inférieure de l'éprouvette.

Par exemple le dimensionnement et les calculs de durée de vie des pièces constituants les turbines aéronautiques s'appuient, d'une part, sur des données matériaux issues d'essais mécaniques classiques, d'autre part, sur des essais de turbines sur banc moteur et sur des retours d'expérience. Le comportement en fluage de pièces comme les pales de turbine haute pression par exemple, est un point clé pour un dimensionnement optimal de la turbine et bénéficie de caractérisations très complètes et approfondies. Lors d'essais mécaniques réalisés sur éprouvettes et plus particulièrement lors d'essais de fluage, il est, primordial de disposer de courbes de déformation exploitables de haute qualité et ce, dès les premiers instants de la mise en charge des éprouvettes. Aujourd'hui, les réalisations structurelles des machines de test en traction utilisant de telles éprouvettes pour essais de fluage ne permettent pas systématiquement d'obtenir un niveau de précision adapté aux besoins. Des points singuliers tels que des phénomènes de reprises de jeux, de « bruits mécaniques », ... peuvent être observés lors de la mise en charge ou pendant l'essai de fluage.

Plus généralement, sur les machines concernées, il existe actuellement un problème de guidage, ou de précision de positionnement relatif entre :
- une première partie de moyens de mesure d'allongement pour des mesures dudit allongement parallèlement à l'axe (X1) de traction,
- et une seconde partie de ces moyens de mesure d'allongement, associée fonctionnellement, voire liée physiquement, à ladite première partie.

A titre d'exemples, les mesures d'allongement peuvent être réalisées à l'aide de capteurs inductifs LVDT (Linear Variable Differential Transformer ou transformateur différentiel à variation linéaire), capacitifs ou à l'aide de dispositifs optiques ou d'interférométrie, etc...

L'invention a notamment pour but d'apporter une solution simple, économique et efficace à ces problèmes, permettant d'éviter les inconvénients de la technique connue et d'améliorer une machine de test en traction, de conception simple et économique, pour la rendre apte à la réalisation d'essais de fluage plus précis, voire plus complexes et d'essais de fatigue en traction comportant éventuellement un grand nombre de cycles. L'invention a en particulier pour but de permettre d'atteindre un niveau de précision élevé des mesures effectuées.

Elle propose à cet effet une machine de test en traction sur éprouvette, caractérisée en qu'elle comprend en outre :
- une première plaque coulissante montée coulissante le long du second élément de fixation et sur laquelle est montée une première partie de moyens de mesure d'allongement pour des mesures dudit allongement parallèlement à l'axe (X1) de traction,
- une seconde plaque intermédiaire, fixée au second élément de fixation et à laquelle est fixée une première barre de guidage qui s'étend, parallèlement à l'axe (X1) de traction et qui traverse librement la première plaque coulissante,
- une troisième plaque coulissante, montée coulissante le long du second élément de fixation et sur laquelle est fixée une seconde partie des moyens de mesure d'allongement,
- un moyen de rappel élastique rappelant les première et troisième plaques coulissantes l'une vers l'autre, axialement,
- une seconde barre de guidage parallèle à la première barre de guidage et qui guide librement axialement les première et troisième plaques coulissantes, en passant à leur niveau,
- des première et seconde tiges de renvoi, palpant les premier et second éléments de fixation, respectivement, la première tige de renvoi étant fixée avec la première plaque coulissante à travers laquelle passe la seconde tige de renvoi qui vient en outre en appui contre la troisième plaque coulissante, pour agir sur elle parallèlement à l'axe de traction, de sorte que les moyens de mesure d'allongement détectent, parallèlement audit axe (X1), un déplacement entre les première et troisième plaques coulissantes.

Ce déplacement est égal à l'allongement axial de l'éprouvette sous l'effet des moyens de traction.

Guider les tiges de renvoi, en évitant l'hyperstaticité a aussi été un souci.

C'est pourquoi il est proposé :
- que la première tige de renvoi traverse la première plaque coulissante à l'endroit d'un passage ouvert transversalement à l'axe (X1) de traction, et
- que la seconde tige de renvoi traverse la première plaque coulissante à l'endroit d'un autre passage ouvert transversalement à l'axe (X1) de traction et dans lequel passe aussi le second élément de fixation.

En relation avec une démarche identique vis-à-vis de la seconde barre de guidage, dont le rôle de guide des première et troisième plaques coulissantes devra alors être différent de celui assuré par la première barre de guidage, il est proposé que la seconde barre de guidage traverse librement la plaque intermédiaire et que le libre coulissement des première et troisième plaques coulissantes parallèlement à l'axe (X1) de traction soit limité par une butée :
- fixée sur la seconde barre de guidage, et
- interposée entre la première plaque coulissante et la plaque intermédiaire.

Dans une application à une machine d'essai du type de celle de FR2918173, on pourra trouver un intérêt, à fins d'efficacité, de conception simple et économique, pour la rendre apte à la réalisation d'essais de fluage très précis, voire complexes, à ce que :
- les premier et second éléments de fixation soient des éléments respectivement supérieur et inférieur de fixation d'extrémités respectivement supérieure et inférieure de l'éprouvette d'essai,
- les première et troisième plaques coulissantes soient des plaques respectivement supérieure et inférieure, et
- les moyens de traction comprennent un levier monté pivotant sur le bâti autour d'un axe transversal audit axe (X1) de traction et relié audit second élément de fixation, coaxialement à l'axe de traction, une extrémité du levier portant une masse pour appliquer un effort axial de traction à ladite seconde extrémité de l'éprouvette.

Utiliser certains capteurs plutôt que d'autres avantage en termes de qualité de mesure mais peut contraindre en termes de réalisation structurelles, compte tenu des exigences précitées exprimées.

Aussi est-il proposé:
- que l'une desdites première et seconde parties des moyens de mesure comprenne des moyens de référence pour lesdites mesures agissant parallèlement à l'axe (X1) de traction,
- et que l'autre desdites première et seconde parties des moyens de mesure comprenne, liée à elle coaxialement, un capteur LVDT.
Un tel capteur, dans ces conditions, permet de mesurer précisément le déplacement relatif entre la première plaque supérieure et la troisième plaque inférieure et par conséquent, l'allongement total de l'éprouvette d'essai (via les tiges de renvoi).

A cet égard, il est par ailleurs de préférence proposé qu'un tel capteur LVDT traverse et soit alors fixé à la plaque coulissante inférieure par l'intermédiaire d'une douille fendue de centrage que bloquera une première vis à laquelle sera fixée une seconde extrémité du moyen de rappel élastique.

Pour encore les mêmes niveaux de précision souhaités, il est proposé que les moyens de référence pour lesdites mesures comprennent une vis de réglage qui traverse et est liée à ladite première plaque coulissante par l'intermédiaire d'une bague taraudée :
- sur laquelle se visse la vis de réglage,
- qui s'étend dans et hors de ladite première plaque coulissante,
- et que bloque une seconde vis à laquelle est fixée une première extrémité supérieure du moyen de rappel élastique.

Ainsi, on pourra allonger certaines distances de guidage et bien bloquer en position la vis de réglage afin de réduire les jeux mécaniques toujours dans l'objectif d'améliorer la précision des mesures réalisées.

Dans une même approche, il est proposé que la machine de test en traction comprenne en outre des guides à billes montés dans les passages des première et troisième plaques coulissantes que traversent les première et seconde barres de guidage, respectivement, les guides à billes traversant (entièrement) lesdits passages jusqu'à s'étendre au-delà d'eux.

L'invention sera mieux comprise et d'autres détails, caractéristiques et avantages de l'invention apparaîtront à la lecture de la description suivante faite à titre d'exemple non limitatif en référence aux dessins annexés.

### BREVE DESCRIPTION DES FIGURES

- la figure 1 est une vue schématique en perspective d'une machine de test en traction conforme à l'invention, même si en particulier la zone I où se trouve l'essentiel des moyens de guidage sécurisant les mesures par le capteur n'y est pas figurée ;
- la figure 2 montre notamment la zone II de la figure 3 ;
- la figure 3 montre notamment le bas de la zone I de la figure 1 ;
- la figure 4 montre encore mieux la zone I des figures 1 et 3 ;
- la figure 5 montre deux courbes d'évolution dans le temps (abscisses) d'un allongement d'une éprouvette (ordonnées) montée soit une machine de l'art antérieur (courbe 85) soit sur la machine conforme à l'invention (courbe 87) ; et
- la figure 6 montre notamment la zone VI de la figure 2, tournée d'un quart de tour.

### DESCRIPTION DETAILLEE

Par souci de concision, on va décrire ci-après un exemple de machine d'essai du type de celle de FR2918173. Mais, des moyens de traction autres qu'à levier 14 monté pivotant sur le bâti 12 et dont une extrémité porte une masse 30 pour appliquer un effort axial de traction à l'éprouvette 20 pourraient être prévus.

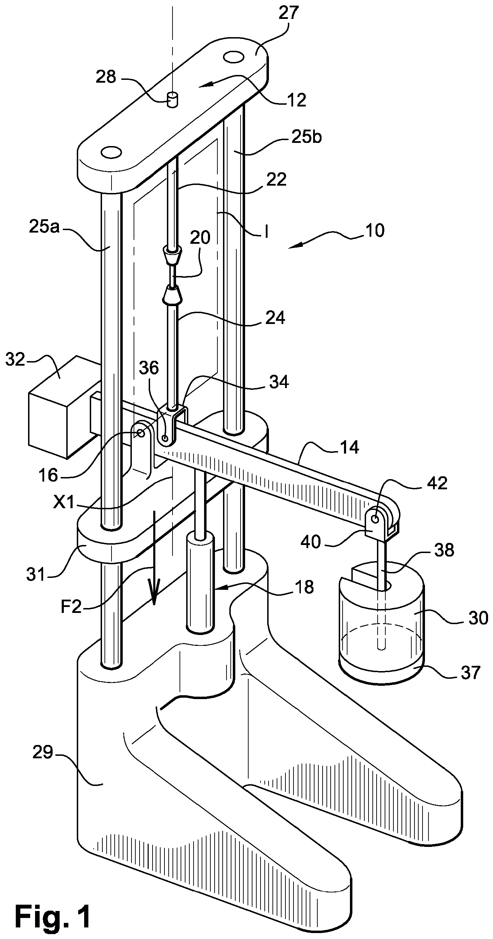

Ainsi, voit-on à la figure 1 une machine d'essai de fluage 10 comprenant :
- un bâti 12 portant un levier 14 monté pivotant autour d'un axe 16 transversal à l'axe X1 de traction et soutenu par un vérin 18,
- et une éprouvette d'essai 20, par exemple en forme de tige cylindrique, qui est fixée à ses extrémités, respectivement supérieure et inférieure, à une tige 22, dite tige supérieure, de suspension au bâti 12 et à une tige 24, dite tige inférieure, de fixation ou d'accrochage au levier 14. Le bâti comprend notamment un premier montant fixe 25a et un second montant fixe 25b parallèle au premier montant fixe. Les deux montants fixes 25a,25b sont parallèles à l'axe de traction X1, s'étendent entre un plateau transversal supérieur 27 et un socle inférieur 29 du bâti 12, en ayant au passage traversées un plateau transversal inférieur 31.

On aura compris que « axial » implique parallèle à (confondu avec) l'axe de traction X1 et que « transversal » est à considérer par rapport à cet axe X1. Le levier 14 s'articule, en basculant sur le plateau transversal inférieur 31.

L'éprouvette 20 et les deux tiges 22 et 24 forment une ligne de charge suivant l'axe de traction X1, lequel est ici sensiblement vertical. Ainsi, suivant l'axe X1 de traction :
- la tige supérieure, ou première tige, 22 définit un premier élément (ou élément supérieur) de fixation à une première extrémité (ou extrémité supérieure) de l'éprouvette d'essai 20 dont un allongement est à mesurer, et
- la tige inférieure, ou seconde tige, 24 définit un second élément (ou élément inférieur) de fixation à une seconde extrémité (ou extrémité inférieure) de la même éprouvette d'essai 20.

L'extrémité supérieure de la tige supérieure 22 est reliée au plateau transversal supérieur 27 par une rotule 28.

Pour définir des moyens de traction configurés pour exercer une traction suivant l'axe X1 de traction et pourvus du second élément 24 de fixation, coaxialement à l'axe (X1) de traction, le levier 14 porte une masse 30. Dans l'exemple présenté, l'axe de rotation transversal 16 du levier sur le plateau transversal inférieur 31 est éloigné d'une extrémité du levier portant la masse 30 d'une distance correspondant environ aux trois quarts de la longueur du levier. L'autre extrémité du levier porte un contrepoids d'équilibrage 32. L'extrémité inférieure de la tige inférieure 24 est reliée au levier 14 par une chape 34 montée rotative autour d'un axe transversal 36 du levier, disposé entre la masse 30 et l'axe de rotation 16 du levier et au voisinage de cet axe de rotation 16, de manière à bénéficier d'un bras de levier important, par exemple égal à dix environ. Le contrepoids d'équilibrage 32 est destiné à équilibrer le levier 14 en l'absence de la masse 30. Ainsi, au repos, il est possible qu'aucune traction ne soit exercée sur l'éprouvette 20. La masse 30 repose sur un plateau circulaire 37 qui est suspendu au levier 14 par une tige 38 reliée à une chape 40 montée autour d'un axe transversal 42 du levier 14. La machine d'essai de fluage peut fonctionner de la manière suivante : à l'arrêt, le vérin 18 est déployé comme représenté sur la figure 1 et soutient le levier 14 en compensant la force provenant de la masse 30. En service, le vérin 18 est rétracté si bien que la chape 34 est soumise à une force de traction axiale (axe X1 donc) vers le bas dont l'intensité dépend à la fois de la masse 30 et du bras de levier. Cette force de traction est transmise par la tige 24 à l'éprouvette, qui tend alors à s'allonger sous l'effet de la traction axiale.

Notamment sur une telle machine, l'invention permet de sécuriser le guidage axial et donc d'améliorer la qualité des mesures sur lesquelles on revient ci-après.

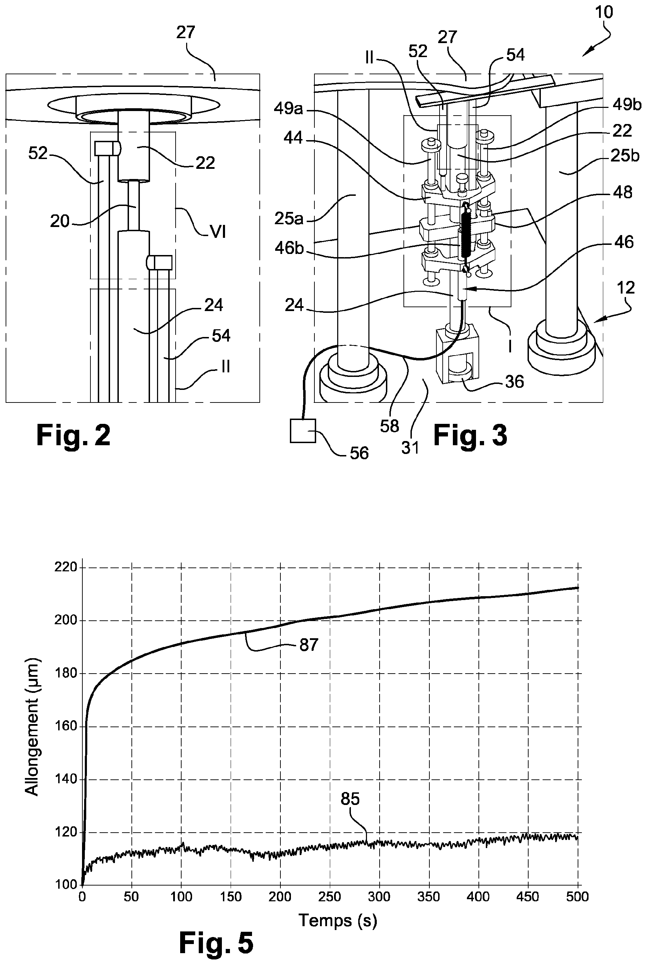

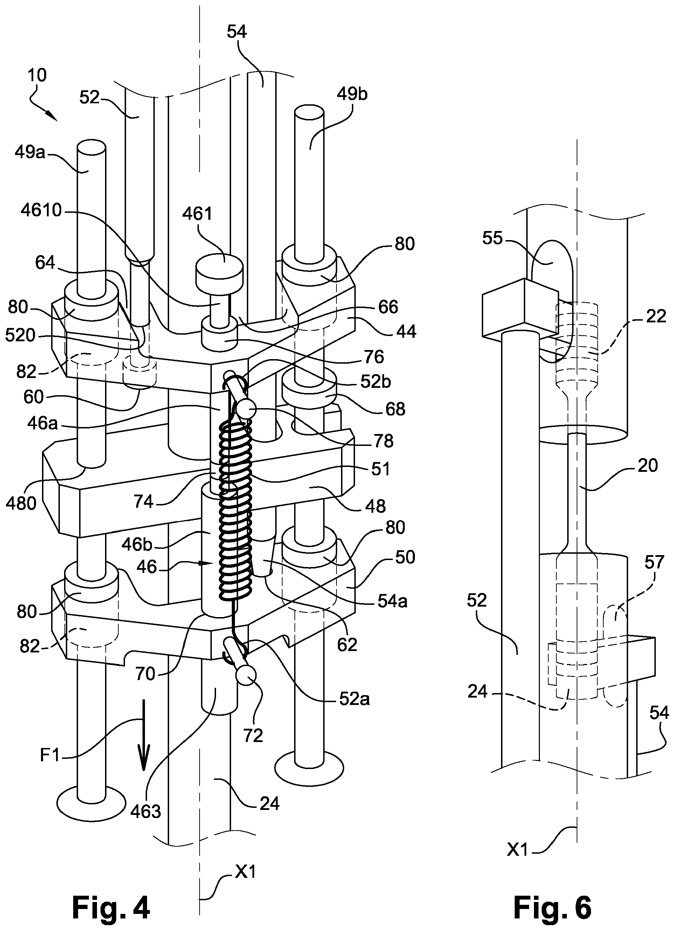

Ainsi est-il prévu, comme illustré figures 3-4 :
- une première plaque coulissante 44 montée coulissante le long du second élément 24 de fixation et sur laquelle est montée une première partie 46a de moyens 46 de mesure d'allongement configurés pour contrôler (mesurer et transmettre) l'allongement de l'éprouvette 20 parallèlement à l'axe X1 de traction,
- une seconde plaque intermédiaire 48, fixée au second élément de fixation 24 et à laquelle est fixée (en 480 figure 4) une première barre de guidage 49a,
- une troisième plaque coulissante 50, montée coulissante le long du second élément de fixation 24 et sur laquelle est fixée une seconde partie 46b des moyens 46 de mesure d'allongement,
- un moyen 51 de rappel élastique rappelant les première et troisième plaques coulissantes 44,50 l'une vers l'autre, axialement,
- et des première et seconde tiges de renvoi, 52,54 respectivement, qui palpent les premier et second éléments 22,24 de fixation, respectivement.
En 520 (figure 4), la première tige de renvoi 52 est fixée avec la première plaque coulissante 44 à travers laquelle passe la seconde tige de renvoi 54 qui vient en outre en appui contre la troisième plaque coulissante 50, pour agir sur elle parallèlement à l'axe (X1) de traction, ici en la poussant vers le bas (flèche F1 figure 4) quand la force de traction vers le bas s'exerce (flèche F2 figure 1). Les moyens 46 de mesure d'allongement vont alors détecter, parallèlement audit axe (X1), un déplacement entre les première et troisième plaques coulissantes 44,50. Ils vont transmettre les mesures à une unité de calcul 56 via un câblage 58.

Vers la zone où se situe l'éprouvette 20, les première et seconde tiges de renvoi, 52,54 viennent respectivement en contact avec le trou de centre de la tête supérieure de l'éprouvette et le trou de centre de la tête inférieure de l'éprouvette, pour une transmission ou un renvoi de données, à savoir celles liées aux mesures de taux d'allongement dans le temps à obtenir ; cf. figure 5. A travers un trou oblong 55, allongé parallèlement à l'axe X1 (figure 6), la première tige de renvoi 52 est en contact avec le trou de centre de la tête supérieure de l'éprouvette 20, cette dernière étant vissée dans l'élément de fixation 22.Idem du côté diamétralement opposé où, à travers un trou oblong 57, allongé parallèlement à l'axe X1 (figure 6), la seconde tige de renvoi 54 est en contact avec le trou de centre de la tête inférieure de l'éprouvette 20, cette dernière étant vissée dans l'élément de fixation 24. Ensuite, les tiges de renvoi, 52,54 s'étendent axialement vers les plaques 44,48,50 jusqu'à ce que la première tige de renvoi 52 soit fixée à la plaque 44 et la seconde tige de renvoi 54 appuie sur la plaque 50.

Lors de l'essai de fluage (éprouvette 20 soumise, suivant F1 et par l'intermédiaire des éléments 22 et 24, à une force de traction et une température prédéfinies), l'éprouvette s'allonge. Les tiges de renvoi et donc les première et troisième plaques coulissantes 44,50 s'écartent axialement. Le capteur 46b/463 mesure le déplacement d'une plaque par rapport à l'autre.

S'étendant de préférence d'un côté dudit second élément 24 de fixation, la première barre de guidage 49a traverse librement (sans contact, sans frottement) la première plaque coulissante 44.

S'étendant de préférence du côté opposé pour équilibrer les guidages et efforts, une seconde barre de guidage 49b guide librement axialement les première et troisième plaques coulissantes 44,50, en passant au niveau d'elles deux. La fixation de la première tige de renvoi 52 avec la première plaque coulissante 44 s'opérera de préférence sous la plaque 44, via une surépaisseur cylindrique 60. L'appui de la seconde tige de renvoi 54 contre la troisième plaque coulissante 50 s'opérera de préférence par une extrémité effilée 54a de la tige de renvoi 54 engagée axialement dans un orifice 62 de la plaque coulissante 50.

Ainsi les première et seconde barres de guidage 49a, 49b agissent axialement de concert sur les première et troisième plaques coulissantes 44,50, avec une fixation intermédiaire de la seule première barre de guidage 49a à la plaque intermédiaire 48 : La seconde barre de guidage 49 qui, comme la première, guide librement (axialement) les première et troisième plaques coulissantes 44,50 est sans contact avec la plaque intermédiaire 48.

En outre, dans l'exemple préféré de réalisation illustré :
- la première tige de renvoi 52 traverse la première plaque coulissante 44 à l'endroit d'un passage 64 ouvert transversalement à l'axe (X1) de traction,
- et la seconde tige de renvoi 54 traverse librement la première plaque coulissante 44 à l'endroit d'un autre passage 66 ouvert transversalement à l'axe (X1) de traction et dans lequel passe aussi le second élément 24 de fixation.

On peut ainsi facilement intervenir sur la première tige de renvoi 52 ou la manoeuvrer et, avec un passage 66 en forme de large ouverture centrale, la première plaque coulissante 44 pourra, comme d'ailleurs la troisième plaque coulissante 50, avoir une forme en U favorable à éviter les contacts avec la seconde tige de renvoi 54 (pour la plaque 44) et le second élément de fixation 24, lequel passe ainsi axialement et librement le long des deux plaques coulissantes 44,50.

Encore pour cette problématique de qualité des relevés de mesures, il est conseillé que la seconde barre de guidage 49b traverse librement la plaque intermédiaire 48 et que le libre coulissement des première et troisième plaques coulissantes 44,50 parallèlement à l'axe (X1) de traction soit limité par une butée 68 fixée sur la seconde barre de guidage 49b et interposée entre la première plaque coulissante 44 et la plaque intermédiaire 50 (lorsque l'allongement axial de l'éprouvette 20 induit un mouvement suivant la flèche F1) .

Pour coupler ce qui précède avec des mesures particulièrement performantes, il est aussi conseillé :
- que l'une desdites première et seconde parties 46a,46b des moyens 46 de mesure comprend des moyens 461 de référence pour lesdites mesures agissant parallèlement à l'axe (X1) de traction,
- et que l'autre 46b desdites première et seconde parties des moyens de mesure comprenne, liée à elle coaxialement, un capteur LVDT 463 axial.

Dans ce cas, on devrait préférer que ce capteur LVDT 463 traverse la troisième plaque coulissante 50, alors inférieure, et soit fixé à elle par l'intermédiaire d'une douille fendue 70 de centrage que bloque une première vis 72 à laquelle est fixée une seconde extrémité (ici inférieure) 52a du moyen 51 de rappel élastique axial.

Le capteur LVDT 463 va ainsi détecter - mesurer - les variations de distance axiale en relation avec une situation de référence définie par la position axiale des moyens de référence 461, laquelle aura été prédéterminée sur la première plaque coulissante 44 au début de l'essai. Le capteur LVDT 463 et les moyens de référence 461 sont reliés ensemble de sorte que, lorsqu'un courant alternatif parcourt l'enroulement primaire du capteur LVDT 463, le déplacement du noyau ferromagnétique du capteur modifie le couplage entre les enroulements primaire et secondaire du capteur. Figure 4, la liaison physique entre le capteur LVDT 463 (sphère à son extrémité) et la vis de réglage référence 461 (surface plane perpendiculaire l'axe X1) est un contact ponctuel référencé 74.

Pour favoriser le niveau de qualité des mesures attendu, les moyens 461 de référence desdites mesures comprendront avantageusement, dans leur coopération avec le capteur LVDT, une vis de réglage 4610 traversant la première plaque coulissante 44 et liée à elle par l'intermédiaire d'une bague 76 taraudée. Sur la bague 76 se visse la vis de réglage 4610 et que bloque une seconde vis 78 à laquelle est fixée une première extrémité 52b, ici supérieure, du moyen 51 de rappel élastique.

La vis de réglage 4610 permet d'affiner ladite position en situation de référence ; et si, comme conseillée, la bague 76 taraudée est longue et s'étend dans la plaque 44, mais aussi se prolonge en dehors, le long du corps de la vis, alors elle guide au mieux cette vis.

Encore pour un guidage axial perfectionné qui n'entrave pas le nécessaire déplacement axial des plaques coulissantes, il est proposé que la machine de test en traction 10 comprenne en outre des guides à billes 80 montés dans les passages 82 (dont seuls deux ont été schématisés figure 4) des première et troisième plaques coulissantes 44,50. Les première et seconde barres de guidage 49a,49b, respectivement, les traversent deux à deux.

Les guides à billes 58 traversent les passages 60 jusqu'à s'étendre au-delà d'eux (au-dessus et/ou en-dessous).

Figure 5, sont illustrées deux courbes, 85,87. Celle 85 est issue d'une machine ne bénéficiant pas d'un double guidage comme ci-avant, avec les deux barres de guidage 49a,49b. La courbe 87 en bénéficie et a été obtenue avec une machine conforme à l'invention qui permet donc d'obtenir systématiquement des courbes de mise en charge et des courbes de fluage exemptes de points singuliers qui étaient dus, comme sur la courbe 85, à des sauts (reprises de jeux, « bruits mécaniques », fluctuations...) rencontrés avec la solution initiale existante. La courbe 87 est lisse et continue.

Si les moyens 46 étaient des moyens optiques, on pourrait prévoir un capteur optique en place du capteur LVDT 463 et un miroir à calage variable en place des moyens 461 de référence des mesures.

## Revendications

1. Machine de test en traction (10), la machine comprenant :
- un bâti (12) pourvu d'un premier élément (22) de fixation à une première extrémité d'une éprouvette d'essai (20) dont un allongement est à mesurer, suivant un axe (X1) de traction,
- des moyens de traction (14) adaptés à exercer une traction suivant l'axe (X1) de traction et pourvus d'un second élément (24), formant une tige axiale, de fixation à une seconde extrémité de l'éprouvette (20), coaxialement à l'axe (X1) de traction,
- une première plaque coulissante (44) montée coulissante le long du second élément (24) de fixation et sur laquelle est montée une première partie (46a) de moyens de mesure d'allongement pour des mesures dudit allongement parallèlement à l'axe (X1) de traction,
- une seconde plaque intermédiaire (48), fixée au second élément (24) de fixation et à laquelle est fixée une première barre de guidage (49a) qui s'étend parallèlement à l'axe (X1) de traction et qui traverse librement la première plaque coulissante (44),
- une troisième plaque coulissante (50), montée coulissante le long du second élément de fixation (24) et sur laquelle est fixée une seconde partie (46b) des moyens de mesure d'allongement,
- des première et seconde tiges de renvoi (52,54), adaptées à palper les premier et second éléments (22,24) de fixation, respectivement, la seconde tige de renvoi (54) passant à travers la première plaque coulissante (44) et venant en appui contre la troisième plaque coulissante (50), pour agir sur elle parallèlement à l'axe (X1) de traction, de sorte que les moyens (46) de mesure d'allongement peuvent détecter, parallèlement audit axe (X1), un déplacement entre les première et troisième plaques coulissantes (44,50), **caractérisée** en que :
- la machine de test en traction (10) comprend en outre :
-- un moyen (51) de rappel élastique rappelant les première et troisième plaques coulissantes (44,50) l'une vers l'autre, axialement,
-- une seconde barre de guidage (49b) parallèle à la première barre de guidage (49a) et qui guide librement axialement les première et troisième plaques coulissantes (44,50), en passant à leur niveau, et
- la première tige de renvoi (52) est fixée avec la première plaque coulissante (44) à travers laquelle passe la seconde tige de renvoi (54).

2. Machine de test en traction (10) selon la revendication 1, dans laquelle :
- la première tige de renvoi (52) traverse la première plaque coulissante (44) à l'endroit d'un passage (64) ouvert transversalement à l'axe (X1) de traction, et
- la seconde tige de renvoi (54) traverse la première plaque coulissante (44) à l'endroit d'un autre passage (66) ouvert transversalement à l'axe (X1) de traction et dans lequel passe aussi le second élément (24) de fixation.

3. Machine de test en traction (10) selon l'une quelconque des revendications précédentes, dans laquelle la seconde barre de guidage (49b) traverse librement la plaque intermédiaire (48) et le libre coulissement des première et troisième plaques coulissantes (44,50) parallèlement à l'axe (X1) de traction est limité par une butée (68) fixée sur la seconde barre de guidage (49b) et interposée entre la première plaque coulissante (44) et la seconde plaque intermédiaire (48).

4. Machine de test en traction (10) selon l'une quelconque des revendications précédentes, dans laquelle :
- les premier et second éléments (22,24) de fixation sont des éléments respectivement supérieur et inférieur de fixation d'extrémités respectivement supérieure et inférieure de l'éprouvette d'essai (20),
- les première et troisième plaques coulissantes (44,50) sont des plaques respectivement supérieure et inférieure, et
- les moyens de traction (14) comprennent un levier (14) monté pivotant sur le bâti (12) autour d'un axe (16) transversal audit axe (X1) de traction et relié audit second élément (24) de fixation, coaxialement à l'axe (X1) de traction, une extrémité du levier (14) portant une masse (30) pour appliquer un effort axial de traction à ladite seconde extrémité de l'éprouvette (20).

5. Machine de test en traction (10) selon l'une quelconque des revendications précédentes, dans laquelle :
- l'une desdites première et seconde parties des moyens de mesure comprend des moyens (4610) de référence pour lesdites mesures agissant parallèlement à l'axe (X1) de traction,
- l'autre desdites première et seconde parties des moyens de mesure comprend, liée à elle coaxialement, un capteur LVDT (46b).

6. Machine de test en traction (10) selon la revendication 5, dans laquelle le capteur LVDT traverse et est fixé à la troisième plaque coulissante (50) par l'intermédiaire d'une douille fendue (70) de centrage que bloque une première vis (72) à laquelle est fixée une seconde extrémité inférieure du moyen de rappel élastique (51).

7. Machine de test en traction (10) selon la revendication 5 ou 6, dans laquelle les moyens (4610) de référence pour lesdites mesures comprennent une vis de réglage qui traverse et est liée à ladite première plaque coulissante (44) par l'intermédiaire d'une bague (76) taraudée sur laquelle se visse la vis de réglage et que bloque une seconde vis (78) à laquelle est fixée une première extrémité supérieure du moyen de rappel élastique.

8. Machine de test en traction (10) selon l'une quelconque des revendications précédentes, qui comprend en outre des guides à billes (80) montés dans les passages (82) des première et troisième plaques coulissantes que traversent les première et seconde barres de guidage, respectivement, les guides à billes traversant lesdits passages (82) jusqu'à s'étendre au-delà d'eux.

## Patentansprüche

1. Zugspannungsprüfmaschine (10), wobei die Maschine umfasst:
- ein Gestell (12), das mit einem ersten Element (22) zur Befestigung an einem ersten Ende eines Prüfstücks (20), dessen Dehnung zu messen ist, entlang einer Zugachse (X1) versehen ist,
- Zugmittel (14), die geeignet sind, eine Zugkraft entlang der Zugachse (X1) auszuüben und mit einem als axiale Stange ausgebildeten zweiten Element (24) zur Befestigung an einem zweiten Ende des Prüfstücks (20) koaxial zur Zugachse (X1) versehen sind,
- eine erste verschiebbare Platte (44), die entlang des zweiten Befestigungselements (24) verschiebbar gelagert ist und auf der ein erster Teil (46a) von Dehnungsmessmitteln für Messungen der Dehnung parallel zur Zugachse (X1) montiert ist,
- eine zweite zwischengeordnete Platte (48), die am zweiten Befestigungselement (24) befestigt ist und an der eine erste Führungsstange (49a) befestigt ist, die parallel zur Zugachse (X1) verläuft und sich frei durch die erste verschiebbare Platte (44) erstreckt,
- eine dritte verschiebbare Platte (50), die entlang des zweiten Befestigungselements (24) verschiebbar gelagert ist und an der ein zweiter Teil (46b) der Dehnungsmessmittel befestigt ist,
- eine erste und eine zweite Umlenkstange (52, 54), die dazu ausgelegt sind, das erste bzw. das zweite Befestigungselement (22, 24) abzutasten, wobei die zweite Umlenkstange (54) durch die erste verschiebbare Platte (44) tritt und an der dritten verschiebbaren Platte (50) in Anlage gelangt, um parallel zur Zugachse (X1) auf sie einzuwirken, so dass die Dehnungsmessmittel (46) parallel zu der Achse (X1) eine Verschiebung zwischen der ersten und der dritten verschiebbaren Platte (44, 50) erfassen können,
**dadurch gekennzeichnet, dass**
- die Zugspannungsprüfmaschine (10) ferner umfasst:
-- ein elastisches Rückstellmittel (51), das die erste und die dritte verschiebbare Platte (44, 50) axial aufeinander zu zurückstellt,
-- eine zweite Führungsstange (49b), die parallel zur ersten Führungsstange (49a) verläuft und die erste und dritte verschiebbare Platte (44, 50) frei axial führt, indem sie auf ihrer Höhe verläuft, und
- die erste Umlenkstange (52) mit der ersten verschiebbaren Platte (44) befestigt ist, durch die die zweite Umlenkstange (54) tritt.

2. Zugspannungsprüfmaschine (10) nach Anspruch 1, wobei
- die erste Umlenkstange (52) sich durch die erste verschiebbare Platte (44) an der Stelle eines quer zur Zugachse (X1) offenen Durchgangs (64) erstreckt, und
- die zweite Umlenkstange (54) sich durch die erste verschiebbare Platte (44) an der Stelle eines weiteren Durchgangs (66) erstreckt, der quer zur Zugachse (X1) offen ist und in den auch das zweite Befestigungselement (24) hineinreicht.

3. Zugspannungsprüfmaschine (10) nach einem der vorhergehenden Ansprüche,
wobei die zweite Führungsstange (49b) sich frei durch die zwischengeordnete Platte (48) erstreckt und wobei die freie Verschiebebewegung der ersten und der dritten verschiebbaren Platte (44, 50) parallel zur Zugachse (X1) von einem Anschlag (68) begrenzt wird, der an der zweiten Führungsstange (49b) befestigt und zwischen die erste verschiebbare Platte (44) und die zweite zwischengeordnete Platte (48) eingefügt ist.

4. Zugspannungsprüfmaschine (10) nach einem der vorhergehenden Ansprüche, wobei
- das erste und das zweite Befestigungselement (22, 24) jeweils ein oberes bzw. ein unteres Befestigungselement für das obere bzw. das untere Ende des Prüfstücks (20) sind,
- die erste und die dritte verschiebbare Platte (44, 50) jeweils eine obere bzw. untere Platte sind, und
- die Zugmittel (14) einen Hebel (14) umfassen, der um eine Achse (16) quer zur Zugachse (X1) schwenkbar am Gestell (12) gelagert und mit dem zweiten Befestigungselement (24) koaxial zur Zugachse (X1) verbunden ist, wobei ein Ende des Hebels (14) eine Masse (30) trägt, um eine axiale Zugkraft auf das zweite Ende des Prüfstücks (20) auszuüben.

5. Zugspannungsprüfmaschine (10) nach einem der vorhergehenden Ansprüche, wobei
- einer aus erstem und zweitem Teil der Messmittel Referenzmittel (4610) für die Messungen umfasst, die parallel zur Zugachse (X1) wirken,
- der andere aus erstem und zweitem Teil der Messmittel koaxial mit diesem verbunden einen LVDT-Sensor (46b) umfasst.

6. Zugspannungsprüfmaschine (10) nach Anspruch 5,
wobei der LVDT-Sensor sich durch die dritte verschiebbare Platte (50) erstreckt und an dieser befestigt ist, und zwar über eine geschlitzte Zentrierhülse (70), die von einer ersten Schraube (72) gesichert wird, an der ein zweites, unteres Ende des elastischen Rückstellmittels (51) befestigt ist.

7. Zugspannungsprüfmaschine (10) nach Anspruch 5 oder 6,
wobei die Referenzmittel (4610) für die Messungen eine Einstellschraube umfassen, die sich durch die erste verschiebbare Platte (44) erstreckt und mit dieser verbunden ist, und zwar über einen Ring (76) mit Innengewinde, in den die Einstellschraube eingeschraubt wird und der durch eine zweite Schraube (78) gesichert wird, an der ein erstes, oberes Ende des elastischen Rückstellmittels befestigt ist.

8. Zugspannungsprüfmaschine (10) nach einem der vorhergehenden Ansprüche,
ferner umfassend Kugelführungen (80), die in den Durchgängen (82) der ersten und der dritten verschiebbaren Platte angebracht sind, durch die sich die erste bzw. zweite Führungsstange erstreckt, wobei sich die Kugelführungen durch die Durchgänge (82) soweit erstrecken, dass sie über diese hinausragen.

## Claims

1. Tensile testing machine (10), said machine comprising:
- a frame (12) provided with a first fastening element (22) at a first end of a test specimen (20) whose elongation is to be measured along a tensile axis (X1),
- tensile means (14) adapted to exert a traction along the tensile axis (X1) and provided with a second fastening element (24), forming an axial bar, at a second end of the specimen (20), coaxially to the tensile axis (X1),
- a first sliding plate (44) slidably mounted along the second fastening element (24) and on which a first part (46a) of elongation measuring means for measurements of said elongation parallel to the tensile axis (X1) is mounted,
- a second intermediate plate (48), which is fixed to the second fastening element (24) and to which a first guide rod (49a) is fixed, the first guide rod extending parallel to the tensile axis (X1) and passing freely through the first sliding plate (44),
- a third sliding plate (50), which is slidably mounted along the second fastening element (24) and to which a second part (46b) of the elongation measuring means is fixed,
- first and second deflection rods (52, 54), adapted to sense the first and second fastening elements (22, 24), respectively, the second deflection rod (54) passing through the first sliding plate (44)and coming to bear against the third sliding plate (50), to act on it parallel to the tensile axis (X1), so that the elongation measuring means (46) can detect, parallel to said axis (X1), a displacement between the first and third sliding plates (44, 50),
the tensile testing machine (10) **characterised in that**:
- the tensile testing machine (10) further comprises
-- an elastic return means (51) returning the first and third sliding plates (44, 50) towards each other axially,
-- a second guide rod (49b) parallel to the first guide rod (49a), which freely guides the first and third sliding plates (44, 50) axially, by being disposed at their level, and
- the first deflection rod (52) is fixed with the first sliding plate (44) through which the second deflection rod (54) passes.

2. Tensile testing machine (10) according to claim 1, wherein:
- the first deflection rod (52) passes through the first sliding plate (44) at a passage (64) which is open transversely to the tensile axis (X1), and
- the second deflection rod (54) passes through the first sliding plate (44) at the location of an additional passage (66) which is open transversely to the tensile axis (X1) and through which the second fastening element (24) also passes.

3. Tensile testingmachine (10) according to any one of the previous claims, in which the second guide rod (49b) passes freely through the intermediate plate (48) and the free sliding of the first and third sliding plates (44, 50) parallel to the tensile axis (X1) is limited by a stop (68) fixed to the second guide rod (49b) and interposed between the first sliding plate (44) and the second intermediate plate (48).

4. Tensile testing machine (10) according to any one of the preceding claims wherein:
- the first and second fastening elements (22, 24) are upper and lower fastening elements for the upper and lower ends respectively of the test specimen (20),
- the first and third sliding plates (44, 50) are upper and lower plates respectively, and
- the tensile means (14) comprise a lever (14) pivotally mounted on the frame (12) about an axis (16) transverse to said tensile axis (X1) and connected to said second fastening element (24), coaxially to the tensile axis (X1), one end of the lever (14) carrying a mass (30) for applying an axial tensile force to said second end of the specimen (20).

5. Tensile testing machine (10) according to any one of the previous claims, wherein:
- one of said first and second parts of the measuring means comprises reference means (4610) for said measurements acting parallel to the tensile axis (X1),
- the other of said first and second parts of the measuring means comprises, coaxially linked thereto, an LVDT sensor (46b).

6. Tensile testing machine (10) according to claim 5, in which the LVDT sensor passes through and is attached to the third sliding plate (50) via a slotted centring sleeve (70) which is locked by a first screw (72) to which a second lower end of the elastic return means (51) is fixed.

7. Tensile testing machine (10) according to claim 5 or 6, in which the reference means (4610) for said measurements comprise an adjusting screw which passes through and is connected to said first sliding plate (44) by means of a drilled ring (76) onto which the adjusting screw is screwed and which is locked by a second screw (78) to which a first upper end of the elastic return means is fixed.

8. Tensile testing machine (10) according to any of the previous claims, which further comprises ball guides (80) mounted in passages (82) of first and third sliding plates through which first and second guide rods, respectively, pass, the ball guides passing through said passages (82) to extend beyond them.
